(19) 〔Europäisches Patentamt / European Patent Office / Office européen des brevets〕

(11) **EP 4 287 079 A1**

(12) **EUROPEAN PATENT APPLICATION**

(43) Date of publication:
06.12.2023 Bulletin 2023/49

(21) Application number: 23156926.0

(22) Date of filing: 15.02.2023

(51) International Patent Classification (IPC):
$G06N\ 10/20^{(2022.01)}$    $G06N\ 3/0464^{(2023.01)}$
$G06N\ 7/01^{(2023.01)}$    $G06N\ 10/60^{(2022.01)}$
$G06N\ 10/80^{(2022.01)}$

(52) Cooperative Patent Classification (CPC):
G06N 3/0464; G06N 7/01; G06N 10/20;
G06N 10/60; G06N 10/80

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.06.2022 JP 2022090013

(71) Applicant: FUJITSU LIMITED
Kawasaki-shi, Kanagawa 211-8588 (JP)

(72) Inventors:
• HADERBACHE, Amir
Kawasaki-shi, 211-8588 (JP)
• PARIZY, Matthieu
Kawasaki-shi, 211-8588 (JP)

(74) Representative: Haseltine Lake Kempner LLP
Cheapside House
138 Cheapside
London EC2V 6BJ (GB)

(54) **PROGRAM, CALCULATION METHOD, AND INFORMATION PROCESSING APPARATUS**

(57) A computer generates, for combinatorial optimization processing that searches for an optimum value of a solution vector including multiple variables each taking a discrete value based on an evaluation value calculated from the solution vector and a coefficient matrix with rows and columns corresponding to the variables, feature data from the coefficient matrix. The computer generates parameter data representing one candidate value amongst multiple candidate values for a parameter controlling a search method of a solver that executes the combinatorial optimization processing by annealing. The computer calculates a predicted value representing a prediction of the evaluation value corresponding to the one candidate value by inputting the feature data and the parameter data to a trained machine learning model. The computer determines a parameter value to be set for the parameter of the solver by repeating the generation of the parameter data and the calculation of the predicted value.

FIG. 5

**Description**

FIELD

The embodiments discussed herein relate to a program, calculation method, and information processing apparatus.

BACKGROUND

It is sometimes the case that information processing systems are called for to solve computationally intensive combinatorial optimization problems fast. Examples of combinatorial optimization problems include traveling salesman problems and knapsack problems. Such an information processing system may use a solver that searches for the optimal solution by annealing. The solver may be a quantum computer that implements quantum annealing. In another case, the solver may be an electronic computer for implementing simulated annealing that simulates the process of quantum annealing using electronic circuitry.

In the case of using a solver, the information processing system may represent a combinatorial optimization problem using a quadratic unconstrained binary optimization (QUBO) matrix. The solver may search for the optimum value of a solution vector in such a manner as to improve an evaluation value calculated by an objective function using the QUBO matrix and the solution vector (for example, to minimize or maximize the evaluation value).

There is a proposed sampling apparatus that uses a quantum device to estimate the minimum value of free energy defined by a parameterized target Hamiltonian. The sampling apparatus implements one protocol selected from multiple optimization protocols including stochastic gradient descent, steepest descent, Bayesian optimization, random search, and local search.

There is also a proposed arithmetic unit for optimizing the values of hyperparameters that control machine learning of a neural network for image recognition by use of one algorithm selected from multiple optimization algorithms. In addition, a system has been proposed which determines the category of input data using a graph neural network (GNN). Further, a system has been proposed which obtains training graph data and iteratively updates parameter values of a graph neural network.

See, for example, U.S. Patent Application Publication No. 2021/0334606; Japanese Laid-open Patent Publication No. 2020-123270; Japanese Laid-open Patent Publication No. 2021-152892; and U.S. Patent No. 11227190.

A solver may have parameters for controlling a search method of searching for the optimal solution of a solution vector. When the values set for the parameters are different, the solver may fail to reach the optimal solution and calculate a solution vector with a different evaluation value. In information processing systems, adjustment of the parameter values is sometimes sought to achieve a better evaluation value. However, it may take a long time to repeatedly call the solver while changing the parameter values.

SUMMARY

One aspect of the embodiments is to speed up adjustment of parameter values set for a solver that performs combinatorial optimization processing.

According to an aspect, there is provided a computer program that causes a computer to execute a process including: generating, for combinatorial optimization processing that searches for an optimum value of a solution vector including a plurality of variables each taking a discrete value based on an evaluation value calculated from the solution vector and a coefficient matrix with rows and columns corresponding to the plurality of variables, feature data from the coefficient matrix; generating parameter data representing one candidate value amongst a plurality of candidate values for a parameter controlling a search method of a solver that executes the combinatorial optimization processing by annealing; calculating a predicted value representing a prediction of the evaluation value corresponding to the one candidate value by inputting the feature data and the parameter data to a machine learning model that has been trained; and determining a parameter value to be set for the parameter of the solver by repeating the generating of the parameter data and the calculating of the predicted value.

BRIEF DESCRIPTION OF DRAWINGS

FIG. 1 illustrates an information processor according to a first embodiment;
FIG. 2 illustrates an example of hardware of an information processor according to a second embodiment;
FIG. 3 illustrates an example of a quadratic unconstrained binary optimization (QUBO) matrix and a cost function;

FIG. 4 illustrates an example of Bayesian optimization for parameter values;
FIG. 5 illustrates an example of a data flow in a parameter search;
FIG. 6 illustrates an example of a graph neural network (GNN) structure;
FIG. 7 illustrates an example of a graph convolution operation;
FIG. 8 illustrates an example of a training data table;
FIGS. 9A to 9D are graphs illustrating examples of distributions of solver parameter values;
FIG. 10 is graphs illustrating an example of distributions of cost function values and normalized cost function values;
FIG. 11 is a graph illustrating an example of prediction of cost function values;
FIG. 12 is a block diagram illustrating an example of functions of the information processor;
FIG. 13 is a flowchart illustrating an example of a procedure for machine learning; and
FIG. 14 is a flowchart illustrating an example of a procedure for a parameter search.

DESCRIPTION OF EMBODIMENTS

Several embodiments will be described below with reference to the accompanying drawings.

(a) First Embodiment

A first embodiment is described hereinafter.

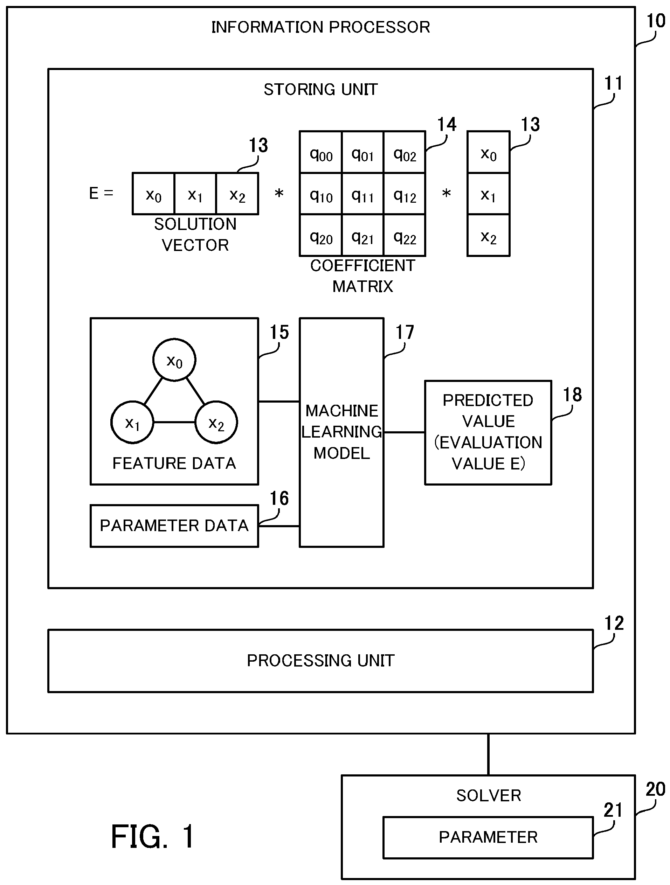

FIG. 1 illustrates an information processor according to the first embodiment.

An information processor 10 of the first embodiment performs a parameter search for determining a parameter value to be set for a parameter 21 of a solver 20. The information processor 10 may be a client device or server device. The information processor 10 may be referred to, for example, as a computer, a classical computer, a machine learning device, or a parameter search device.

The solver 20 performs combinatorial optimization processing for searching for the optimum value of a solution vector in a combinatorial optimization problem by annealing. Examples of combinatorial optimization problems include traveling salesman problems and knapsack problems. The parameter 21 is a parameter that controls a search method of the solver 20. The solver 20 searches for the optimum value of the solution vector by a search method according to a parameter value set for the parameter 21.

The solver 20 may be a quantum computer for performing quantum annealing using quantum bits or qubits. Alternatively, the solver 20 may be an electronic computer for implementing simulated annealing, which simulates quantum annealing with the use of electronic circuitry. Quantum annealing gradually reduces quantum fluctuations to find the optimal solution that minimizes or maximizes an evaluation value calculated by a given objective function in search space for the solution vector. The objective function is sometimes called cost function or energy function. Quantum annealing is suitable for combinatorial optimization problems where multiple local solutions exist in the search space.

The information processor 10 includes a storing unit 11 and a processing unit 12. The storing unit 11 may be volatile semiconductor memory, such as random access memory (RAM), or a non-volatile storage device, such as a hard disk drive (HDD) or flash memory. The processing unit 12 is, for example, a processor, such as a central processing unit (CPU), graphics processing unit (GPU), or digital signal processor (DSP). Note however that the processing unit 12 may include an electronic circuit, such as an application specific integrated circuit (ASIC) or field programmable gate array (FPGA). The processor executes programs stored in memory, such as RAM (or in the storing unit 11). The term "multiprocessor", or simply "processor", may be used to refer to a set of multiple processors.

The storing unit 11 stores a coefficient matrix 14. The combinatorial optimization processing searches for the optimum value of a solution vector 13 based on an evaluation value which is calculated from the solution vector 13 and the coefficient matrix 14. For example, the combinatorial optimization processing searches for the solution vector 13 that minimizes or maximizes the evaluation value. The solution vector 13 includes multiple variables each taking a discrete value (e.g., a binary digit of 0 or 1). The coefficient matrix 14 has rows and columns corresponding to those variables. The coefficient matrix 14 may be a square or symmetric matrix. The evaluation value may be $x^t \times Q \times x$, where x is the solution vector 13, Q is the coefficient matrix 14, and $x^t$ is the transpose of x. The evaluation value may be called cost or energy.

The coefficient matrix 14 is derived from definitions of a combinatorial optimization problem. The coefficient matrix 14 may be a so-called quadratic unconstrained binary optimization (QUBO) matrix. The coefficient matrix 14 may have a mixture of zero elements and non-zero elements. The coefficient matrix 14 may include a cost matrix and a constraint matrix. The cost matrix includes coefficients that represent the real nature of the combinatorial optimization problem, which takes no account of constraints between the multiple variables. The constraint matrix includes coefficients that represent constraints between the variables. The constraint matrix may be referred to as the penalty matrix. The constraint matrix adds a large penalty to an evaluation value calculated from the solution vector 13 failing to satisfy the constraints. The cost matrix and the constraint matrix may be separated. The coefficient matrix 14 may be a matrix obtained by adding the cost matrix and the constraint matrix together.

The storing unit 11 also stores a trained machine learning model 17. As described later, the machine learning model 17 uses feature data 15 and parameter data 16 to calculate a predicted value 18. The information processor 10 may train the machine learning model 17 using training data which maps multiple coefficient matrices, multiple parameter values, and multiple evaluation values to each other. The machine learning model 17 may be a neural network or a convolutional neural network that performs a convolution operation. Alternatively, the machine learning model 17 may be a graph neural network (GNN) that performs a convolution operation on graph data.

The processing unit 12 performs a parameter search for determining a parameter value to be set for the parameter 21 of the solver 20 from the coefficient matrix 14 representing a given combinatorial optimization problem. Depending on the parameter value set for the parameter 21, the solver 20 may fail to reach the optimal solution of the solution vector 13 and calculate the solution vector 13 with a different evaluation value. In view of this, the processing unit 12 searches for a parameter value that produces a good evaluation value. At this time, the processing unit 12 need not actually call the solver 20.

The processing unit 12 generates the feature data 15 from the coefficient matrix 14 for the target combinatorial optimization processing. The feature data 15 may include graph data including multiple nodes corresponding to multiple variables and multiple feature vectors individually mapped to the multiple nodes. For example, when the element at a row i and a column j of the coefficient matrix 14 is non-zero, the processing unit 12 adds an edge between a node i and a node j. When the element at the row i and the column j of the coefficient matrix 14 is zero, on the other hand, the processing unit 12 adds no edge between the node i and the node j. In addition, for example, the processing unit 12 assigns the row i or a column i of the coefficient matrix 14 to the node i as a feature vector. Note that if the coefficient matrix 14 is a symmetric matrix, the row i and the column j contain the same number sequence.

The processing unit 12 generates parameter data 16 that represents one candidate value selected amongst multiple candidate values that the parameter 21 may take. The parameter data 16 may be the selected candidate value itself, or may be a value obtained by converting the selected candidate value. Note that the solver 20 may have a set of parameters. In that case, the processing unit 12 selects one candidate value for each of the parameters to generate a candidate value set corresponding to the set of parameters.

The processing unit 12 calculates the predicted value 18 by inputting the feature data 15 and the parameter data 16 to the machine learning model 17. The predicted value 18 indicates the prediction of an evaluation value that would be achieved under the selected candidate value. The achieved evaluation value corresponds to the solution vector 13 reached by the solver 20 through the combinatorial optimization processing. At this time, the processing unit 12 need not actually call the solver 20 to calculate the evaluation value.

The processing unit 12 repeats the generation of the parameter data 16 and the calculation of the predicted value 18 while changing the selected candidate value, thereby determining a parameter value to be set for the parameter 21. For example, the processing unit 12 searches for a parameter value that minimizes or maximizes the predicted value 18. The processing unit 12 may obtain the optimal solution of the solution vector 13 from the solver 20 by calling the solver 20 with designation of the determined parameter value and the coefficient matrix 14. In addition, the processing unit 12 may display the determined parameter value on a display device, store it in a non-volatile storage device, or transmit it to a different information processor.

In determining a parameter value, the processing unit 12 may perform Bayesian optimization. For example, the processing unit 12 performs statistical analysis, such as regression analysis, using one or more tested candidate values and one or more calculated predicted values, thereby estimating an expected value and variance of the predicted value corresponding to an untested candidate value. In consideration of the variance, the processing unit 12 selects, as a candidate value to be tested next, a candidate value for which a predicted value better than the current one is likely to be obtained. The processing unit 12 may calculate the endpoints of a 95% confidence interval from the expected value and the variance and select a candidate value with a minimum or maximum calculated endpoint. A candidate value close to a tested candidate value for which a good predicted value has been produced or a candidate value far from a tested candidate value is likely to be selected next.

As described above, the information processor 10 of the first embodiment generates the feature data 15 from the coefficient matrix 14 for combinatorial optimization processing that searches for the optimum value of the solution vector 13 based on an evaluation value calculated from the solution vector 13 and the coefficient matrix 14. The information processor 10 generates the parameter data 16 representing one candidate value amongst multiple candidate values of the parameter 21, which controls the search method of the solver 20. The information processor 10 inputs the feature data 15 and the parameter data 16 to the machine learning model 17 to calculate the predicted value 18 representing the prediction of the evaluation value. The information processor 10 repeats generation of the parameter data 16 and calculation of the predicted value 18 to determine a parameter value to be set for the parameter 21.

Herewith, the information processor 10 is able to adjust the parameter value so that the solver 20 reaches the optimum value of the solution vector 13, thereby improving the accuracy of the combinatorial optimization processing. In addition, the information processor 10 accelerates the adjustment of the parameter value of the solver 20 compared to the case of repeatedly calling the solver 20.

Note that the feature data 15 may include graph data including nodes corresponding to the variables and feature vectors mapped to the nodes, and the machine learning model 17 may be a graph convolutional model that performs a convolution operation on the feature vectors according to the connection relationship between the nodes. As a result, the machine learning model 17 is able to extract appropriate features from the coefficient matrix 14 representing the relationship between each pair of variables, which improves the prediction accuracy of the evaluation value.

In addition, the information processor 10 may generate graph data from each of the cost matrix and the constraint matrix before they are added to each other, and the machine learning model 17 may perform a graph convolution operation on each of the two sets of graph data. This allows the information processor 10 to extract appropriate features from the cost matrix and the constraint matrix in consideration of the difference in trends between the distribution of coefficients included in the cost matrix and the distribution of coefficients included in the constraint matrix, which improves the prediction accuracy of the evaluation value.

Further, the information processor 10 may run Bayesian optimization using one or more tested candidate values and one or more calculated predicted values to determine the optimum parameter value. This allows the information processor 10 to efficiently search for the optimum parameter value with a small number of trials. The information processor 10 may train the machine learning model 17 using training data in which multiple coefficient matrices, multiple parameter values, and multiple evaluation values are mapped to each other. This allows for generation of the machine learning model 17 with high prediction accuracy.

(b) Second Embodiment

A second embodiment is described hereinafter.

An information processor 100 of the second embodiment calculates a solution of a QUBO problem by calling a QUBO solver 30 that implements annealing. The information processor 100 also performs a parameter search for searching for the optimum values for parameters of the QUBO solver 30. In addition, the information processor 100 runs machine learning for training a machine learning model used for the parameter search. Note however that the machine learning, the parameter search, and the QUBO problem solving may be performed by different information processors. The information processor 100 may be a client device or server device. The information processor 100 may be referred to, for example, as a computer, a classical computer, a machine learning device, or a parameter search device. The information processor 100 corresponds to the information processor 10 of the first embodiment. The QUBO solver 30 corresponds to the solver 20 of the first embodiment.

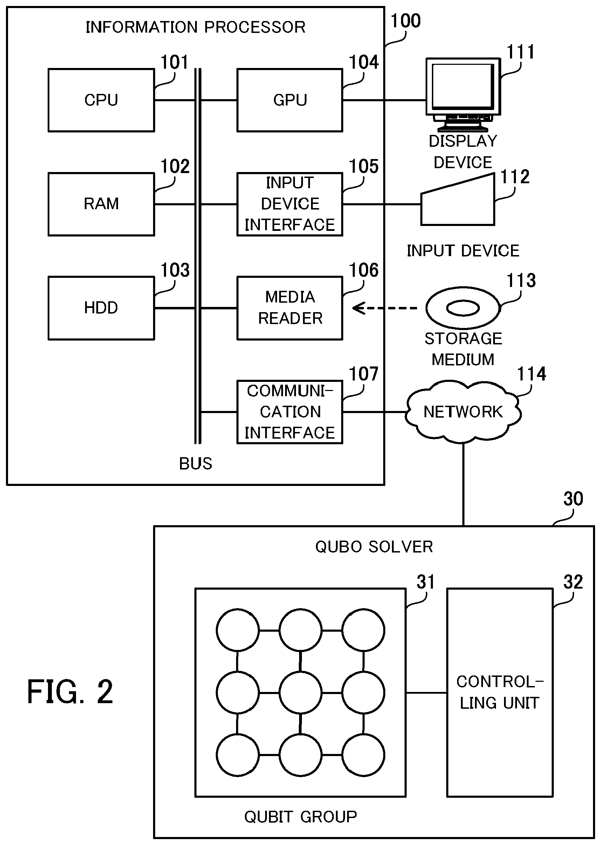

FIG. 2 illustrates an example of hardware of an information processor according to the second embodiment.

The information processor 100 includes a CPU 101, a RAM 102, an HDD 103, a GPU 104, an input device interface 105, a media reader 106, and a communication interface 107. The CPU 101 or the GPU 104 corresponds to the processing unit 12 of the first embodiment. The RAM 102 or the HDD 103 corresponds to the storing unit 11 of the first embodiment.

The CPU 101 is a processor configured to execute program instructions. The CPU 101 reads out programs and data stored in the HDD 103, loads them into the RAM 102, and executes the loaded programs. The information processor 100 may include two or more processors.

The RAM 102 is volatile semiconductor memory for temporarily storing therein programs to be executed by the CPU 101 and data to be used by the CPU 101 for its computation. The information processor 100 may be provided with a different type of volatile memory other than R_AM.

The HDD 103 is a non-volatile storage device to store therein software programs, such as an operating system (OS), middleware, and application software, and various types of data. The information processor 100 may be provided with a different type of non-volatile storage device, such as flash memory or a solid state drive (SSD).

The GPU 104 performs image processing in cooperation with the CPU 101, and displays video images on a screen of a display device 111 coupled to the information processor 100. The display device 111 may be a cathode ray tube (CRT) display, a liquid crystal display (LCD), an organic electro-luminescence (OEL) display, or a projector. An output device, such as a printer, other than the display device 111 may be connected to the information processor 100. In addition, the GPU 104 may be used as a general-purpose computing on graphics processing unit (GPGPU). The GPU 104 may execute a program according to an instruction from the CPU 101. The information processor 100 may have volatile semiconductor memory other than the RAM 102 as GPU memory.

The input device interface 105 receives an input signal from an input device 112 connected to the information processor 100. Various types of input devices may be used as the input device 112, for example, a mouse, a touch panel, or a keyboard. Multiple types of input devices may be connected to the information processor 100.

The media reader 106 is a device for reading programs and data recorded on a storage medium 113. The storage medium 113 may be, for example, a magnetic disk, an optical disk, or semiconductor memory. Examples of the magnetic disk include a flexible disk (FD) and HDD. Examples of the optical disk include a compact disc (CD) and digital versatile disc (DVD). The media reader 106 copies the programs and data read out from the storage medium 113 to a different storage medium, for example, the RAM 102 or the HDD 103. The read programs may be executed by the CPU 101.

The storage medium 113 may be a portable storage medium and used to distribute the programs and data. In addition, the storage medium 113 and the HDD 103 may be referred to as computer-readable storage media.

The communication interface 107 communicates with different information processors and the QUBO solver 30 via a network 114. The communication interface 107 may be a wired communication interface connected to a wired communication device, such as a switch or router, or may be a wireless communication interface connected to a wireless communication device, such as a base station or access point.

The QUBO solver 30 is a computer for solving a QUBO problem representing a combinatorial optimization problem by annealing. The QUBO solver 30 may be a quantum computer for performing quantum annealing or an electronic computer for implementing simulated annealing, which simulates quantum annealing by using electronic circuitry.

The QUBO solver 30 includes a qubit group 31 and a controlling unit 32. The qubit group 31 includes multiple qubits. The QUBO solver 30 may simulate the behavior of the qubits using electronic circuitry. The controlling unit 32 receives, from the information processor 100, a request message including a QUBO matrix which represents a QUBO problem and parameter values that control an optimum solution search method. The controlling unit 32 uses the qubit group 31 to calculate a solution vector indicating the optimal solution from the QUBO matrix according to a search method in agreement with the parameter values. The controlling unit 32 calculates the solution vector in such a manner as to improve a cost function value (for example, to minimize or maximize the cost function value). The controlling unit 32 transmits the solution vector and the cost function value corresponding to the solution vector to the information processor 100.

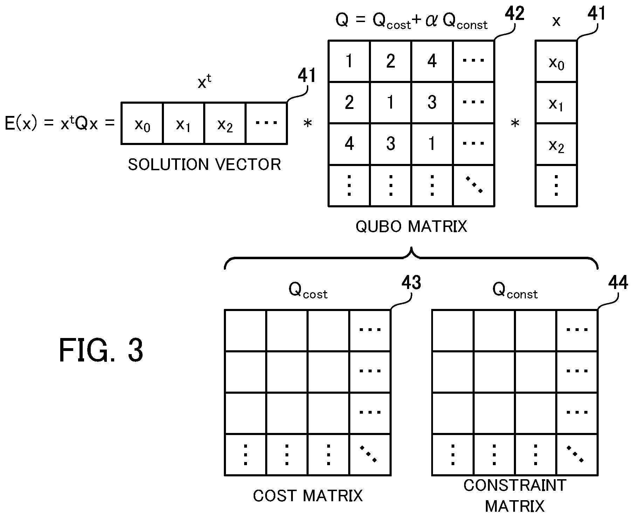

FIG. 3 illustrates an example of a QUBO matrix and a cost function.

A combinatorial optimization problem is represented by a QUBO matrix 42. A cost function E(x) calculates a cost function value from a solution vector 41 to be optimized and the given QUBO matrix 42, as defined by Equation (1) below. The solution vector 41 is a vector containing multiple variables. Each variable takes a binary value of 0 or 1. The QUBO matrix 42 is a symmetric matrix with rows and columns corresponding to the multiple variables. Each element contained in the QUBO matrix 42 is a real number. In Equation (1), x is the solution vector; Q is the QUBO matrix; $x_i$ is the i-th variable; and $q_{ij}$ is the element at the row i and the column j of the QUBO matrix.

$$E(x) = x^t Q x = \sum_{i,j} q_{ij} x_i x_j \qquad (1)$$

The cost function E(x) is sometimes called an objective function, an evaluation function, or an energy function. The cost function value is sometimes called an evaluation value, cost, or energy. The QUBO solver 30 searches for the solution vector 41 that minimizes or maximizes the cost function value.

The QUBO matrix 42 is generated by combining a cost matrix 43 and a constraint matrix 44. The QUBO matrix 42 is obtained by adding $\alpha$ times of the constraint matrix 44 to the cost matrix 43. $\alpha$ is a QUBO factor used to adjust the degree of impact of the constraint matrix 44 on the cost function value.

The cost matrix 43 is a coefficient matrix derived from definitions of the combinatorial optimization problem other than constraints, and represents the relationship between each pair of variables. The constraint matrix 44 represents constraints on values taken by the multiple variables. The constraint matrix 44 is sometimes called a penalty matrix. The constraint matrix 44 imposes a large penalty on the cost function value corresponding to the solution vector 41 that fails to satisfy the constraints. The information processor 100 is able to separately generate the cost matrix 43 and the constraint matrix 44 from the definitions of the combinatorial optimization problem.

Here, the quadratic knapsack problem (QKP) is described as an example of the combinatorial optimization problem. The QKP is defined by the cost function given by Equation (2) below. A knapsack with a capacity C is packed with some subset of items selected amongst a set of items. The i-th item has a value $v_i$ and weight $w_i$ as attributes. The objective of the QKP is to select a subset of items to fill the knapsack so as to maximize the overall value of the packed items while the overall weight does not exceed the knapsack capacity C.

$$E(x) = \sum_{i,j} p_{ij} x_i x_j + \alpha (\sum_i w_i x_i - C)^2 \qquad (2)$$

In Equation (2), $p_{ij}$ denotes the total value obtained when both the i-th item and the j-th item are packed. For example, $p_{ij}$ is the sum of $v_i$ and $v_j$. $x_i$ is a variable indicating whether the i-th item is packed in the knapsack, and takes a binary value of 0 or 1. The first term in the right-hand side of Equation (2) corresponds to the cost matrix 43. $p_{ij}$ corresponds to the coefficient at the row i and the column j of the cost matrix 43. The second term in the right-hand side of Equation (2) corresponds to the constraint matrix 44. Coefficients included in the constraint matrix 44 are calculated by expanding the second term in the right-hand side.

The QUBO solver 30 includes solver parameters used to control the search method of searching for the optimal solution of the solution vector 41. Specific examples of the solver parameters are described later. Depending on parameter values of the solver parameters, the QUBO solver 30 may fail to reach the optimal solution within a certain period of time and output the solution vector 41 with a different cost function value as search results. Therefore, the information processor 100 runs Bayesian optimization to search for parameter values that minimize or maximize the cost function value. Note that whether to maximize or minimize the cost function value is determined by the definitions of the combinatorial optimization problem.

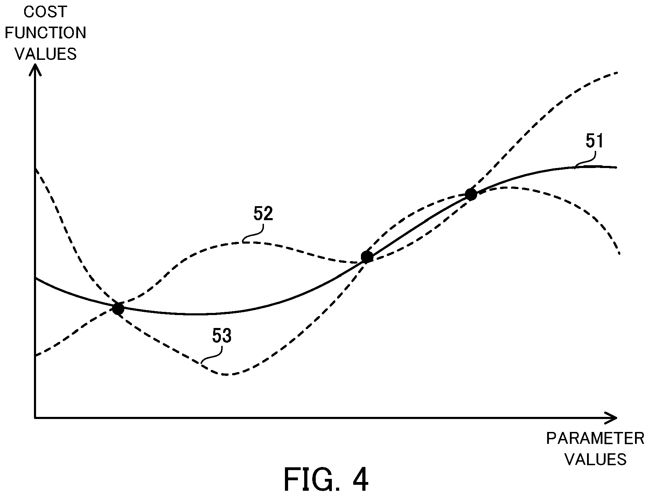

FIG. 4 illustrates an example of Bayesian optimization for parameter values.

The Bayesian optimization plots each cost function value corresponding to a parameter value tested so far as a measured point in parameter space. Based on the plotted measured points, the Bayesian optimization estimates the distribution of the cost function values in the parameter space. At this time, the Bayesian optimization calculates not only expected values of the cost function values but also the variance representing an estimation error. In consideration of the variance, the Bayesian optimization selects parameter values that are likely to yield a better cost function value (e.g., a smaller or larger cost function value) than any of the measured points obtained up to this point.

For example, the Bayesian optimization calculates a curve 51 representing the distribution of expected cost function values from multiple measured points. The Bayesian optimization also calculates a curve 52 representing the upper bound of the 95% confidence interval and a curve 53 representing the lower bound of the 95% confidence interval. The variance at each measured point is zero or sufficiently small. The variance in parameter values close to each measured point is relatively small. On the other hand, the variance in the parameter values far from each measured point is relatively large. Therefore, a parameter value close to a measured point with a good cost function value obtained or a parameter value far from a measured point is likely to be selected.

If the goal is to minimize the cost function value, the Bayesian optimization selects, for example, a parameter value with the lowest lower bound of the 95% confidence interval as the next parameter value to be tested. If the goal is to maximize the cost function value, on the other hand, the Bayesian optimization selects, for example, a parameter value with the highest upper bound of the 95% confidence interval as the next parameter value to be tested.

Thus, using Bayesian optimization, the information processor 100 is able to achieve parameter value optimization for the QUBO solver 30. However, if the QUBO solver 30 is actually called repeatedly to measure the cost function value corresponding to a given parameter value, the parameter search may take a long time. In view of this, the information processor 100 uses a machine learning model to predict a cost function value corresponding to the parameter value.

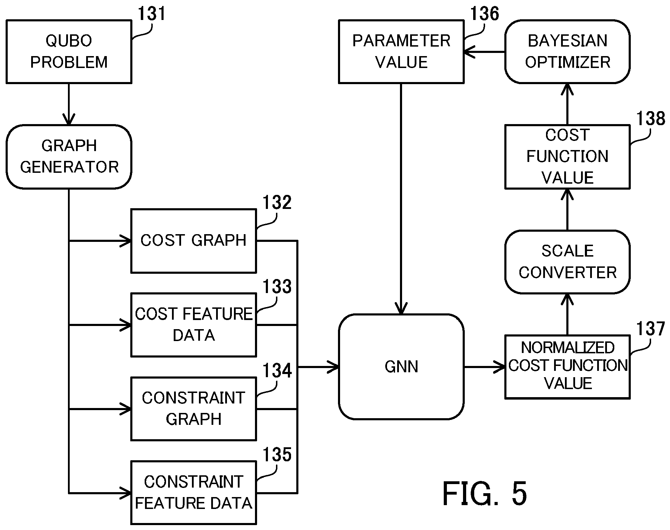

FIG. 5 illustrates an example of a data flow in a parameter search.

The information processor 100 searches for a parameter value of the QUBO solver 30, suitable for a QUBO problem 131. First, the information processor 100 uses a graph generator to generate a cost graph 132, cost feature data 133, a constraint graph 134, and constraint feature data 135 from the QUBO problem 131.

The cost graph 132 is an undirected graph including multiple nodes corresponding to multiple variables. The cost graph 132 includes, as inter-node edges, edges corresponding to the distribution of non-zero elements included in the cost matrix 43. The cost graph 132 is generated from the cost matrix 43. If the element at a row i and a column j of the cost matrix 43 is non-zero, the cost graph 132 includes an edge connecting a node i and a node j. If the element at the row i and the column j of the cost matrix 43 is zero, the cost graph 132 includes no edge connecting the node i and the node j.

The cost feature data 133 includes multiple feature vectors associated with the multiple nodes of the cost graph 132. The cost feature data 133 is generated from the cost matrix 43. The feature vector of the node i is an enumeration of the elements of the row i of the cost matrix 43. Therefore, the number of dimensions of the feature vector is the same as the length of one side of the cost matrix 43, and is also the same as the number of dimensions of the solution vector 41. Note however that because the cost matrix 43 is a symmetric matrix, the feature vector of the node i is the same as an enumeration of the elements of a column i of the cost matrix 43.

The constraint graph 134, like the cost graph 132, is an undirected graph including multiple nodes corresponding to multiple variables. Note however that the constraint graph 134 includes, as inter-node edges, edges corresponding to the distribution of non-zero elements included in the constraint matrix 44. The constraint graph 134 is generated from the constraint matrix 44. If the element at the row i and the column j of the constraint matrix 44 is non-zero, the constraint graph 134 includes an edge connecting the node i and the node j. If the element at the row i and the column j of the constraint matrix 44 is zero, the constraint graph 134 includes no edge connecting the node i and the node j.

The constraint feature data 135 includes multiple feature vectors associated with the multiple nodes of the constraint graph 134. The constraint feature data 135 is generated from the constraint matrix 44. The feature vector of the node i is an enumeration of the elements of the row i of the constraint matrix 44. Therefore, the number of dimensions of the feature vector is the same as the length of one side of the constraint matrix 44, and is also the same as the number of dimensions of the solution vector 41. Note however that because the constraint matrix 44 is a symmetric matrix, the feature vector of the node i is the same as an enumeration of the elements of the column i of the constraint matrix 44.

Note here that the cost matrix 43 and the constraint matrix 44 have different trends in the distribution of non-zero elements. The cost matrix 43 includes many relatively small negative numbers (i.e., negative numbers whose absolute values are relatively small). On the other hand, the constraint matrix 44 includes a mixture of positive numbers and relatively large negative numbers (negative numbers whose absolute values are relatively large). Therefore, separation of the cost graph 132 and the constraint graph 134 and separation of the cost feature data 133 and the constraint feature data 135 contributes to improved prediction accuracy of the machine learning model.

The information processor 100 selects a parameter value 136 to be tested next. The information processor 100 inputs the cost graph 132, the cost feature data 133, the constraint graph 134, the constraint feature data 135, and the parameter value 136 to a trained GNN. The GNN calculates a normalized cost function value 137 from the data input thereto. The normalized cost function value 137 is obtained by scaling a cost function value to a range of 0 to 1, inclusive. The output of the GNN has been normalized in order to ensure proper training and good predictions of the GNN.

The information processor 100 uses a scale converter to convert the normalized cost function value 137 to a cost function value 138. For example, the information processor 100 converts the normalized cost function value 137 being in the range of 0 to 1, inclusive, to the cost function value 138 being in the range of -20 million to 0, inclusive. The scale conversion is, for example, a linear transformation by mini-max. Then, using a Bayesian optimizer, the information processor 100 selects the parameter value 136 to be input to the GNN next, based on the cost function values 138 calculated up to this point. If determining that the parameter value 136 minimizing or maximizing the cost function value 138 has been found, that is, if determining that there is no parameter value 136 with which a better cost function value 138 is possibly obtained, the information processor 100 stops the Bayesian optimization.

Prediction of the cost function value 138 using the GNN may be implemented using the GPU 104. Each call to the QUBO solver 30 may take several seconds (e.g., 3 seconds). On the other hand, the prediction of the cost function value 138 using the GPU 104 may be performed in about tens of milliseconds (e.g., 46 milliseconds) each time. Therefore, the time for conducting a parameter search is shortened.

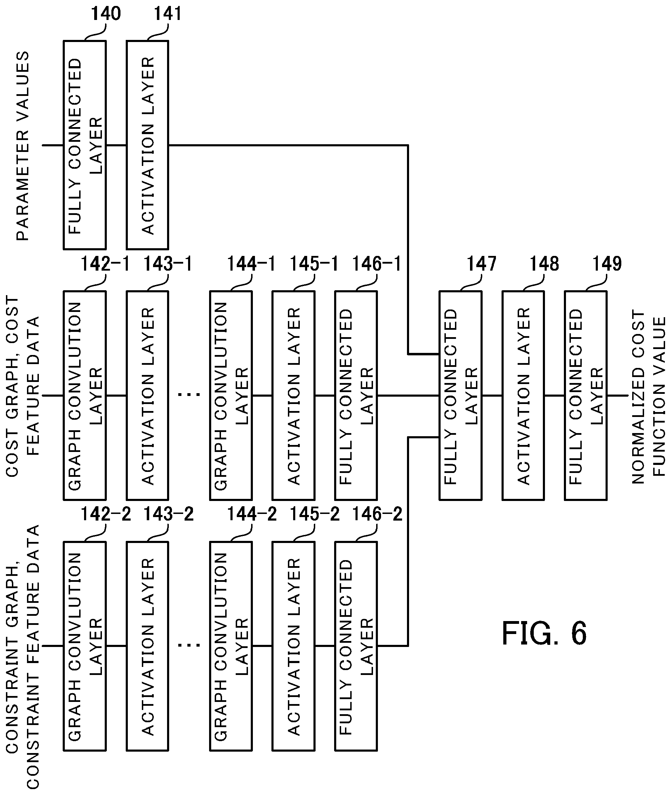

FIG. 6 illustrates an example of a GNN structure.

The GNN includes, for the parameter value 136, a fully connected layer 140 and an activation layer 141. The fully connected layer 140 receives one or more parameter values. For example, the fully connected layer 140 receives a four-dimensional vector enumerating parameter values of four solver parameters of the QUBO solver 30. The fully connected layer 140 converts each of the one or more received parameter values to output a feature vector. The output of the fully connected layer 140 may have the same dimensionality as the input or may have different dimensionality from that of the input. The activation layer 141 passes each element of the feature vector output from the fully connected layer 140 through an activation function. The activation function is, for example, a tanh or sigmoid function. For example, the activation layer 141 outputs a feature vector with the number of dimensions corresponding to the number of solver parameters.

The GNN also includes, for the cost graph 132, multiple graph convolution layers, such as graph convolution layers 142-1 and 144-1; multiple activation layers, such as activation layers 143-1 and 145-1; and a fully connected layer 146-1. The multiple graph convolution layers and the multiple activation layers are arranged alternately one by one.

The graph convolution layer 142-1 receives the cost graph 132 and the cost feature data 133. The graph convolution layer 142-1 performs a graph convolution operation, which updates the feature vector of each node included in the cost feature data 133, according to the inter-node edges indicated by the cost graph 132. The graph convolution operation is described later. The updated feature vector may have the same number of dimensions as the one before the update or may have the different number of dimensions from that of the one before the update. The activation layer 143-1 passes each element of the feature vector output from the graph convolution layer 142-1 through an activation function.

The graph convolution layer 144-1 performs a graph convolution operation, which updates the feature vector of each node received from the preceding activation layer, according to the inter-node edges indicated by the cost graph 132. The activation layer 145-1 passes each element of the feature vector output from the graph convolution layer 144-1 through an activation function. The fully connected layer 146-1 combines the feature vectors of multiple nodes output from the activation layer 145-1 to output a single feature vector. The output of the fully connected layer 146-1 may have the same dimensionality as the feature vectors received by the graph convolution layer 142-1 or may have a different dimensionality from that of the feature vectors received by the graph convolution layer 142-1. For example, the fully connected layer 146-1 outputs a feature vector with the number of dimensions corresponding to the number of variables of the combinatorial optimization problem.

The GNN includes, for the constraint graph 134, multiple graph convolution layers, such as graph convolution layers 142-2 and 144-2; multiple activation layers, such as activation layers 143-2 and 145-2; and a fully connected layer 146-2. The multiple graph convolution layers and the multiple activation layers are arranged alternately one by one.

The graph convolution layer 142-2 receives the constraint graph 134 and the constraint feature data 135. The graph convolution layer 142-2 performs a graph convolution operation, which updates the feature vector of each node included in the constraint feature data 135, according to the inter-node edges indicated by the constraint graph 134. The procedure of the graph convolution operation is the same as that of the graph convolution layer 142-1; however, the operation target data is different from that of the graph convolution layer 142-1. The updated feature vector may have the same number of dimensions as the one before the update or may have the different number of dimensions from that of the one before the update. The activation layer 143-2 passes each element of the feature vector output from the graph convolution layer 142-2 through an activation function.

The graph convolution layer 144-2 performs a graph convolution operation, which updates the feature vector of each node received from the preceding activation layer, according to the inter-node edges indicated by the constraint graph 134. The activation layer 145-2 passes each element of the feature vector output from the graph convolution layer 144-2 through an activation function. The fully connected layer 146-2 combines the feature vectors of multiple nodes output from the activation layer 145-2 to output a single feature vector. The output of the fully connected layer 146-2 may have the same dimensionality as the feature vectors received by the graph convolution layer 142-2 or may have a different dimensionality from that of the feature vectors received by the graph convolution layer 142-2. For example, the fully connected layer 146-2 outputs a feature vector with the number of dimensions corresponding to the number of variables of the combinatorial optimization problem.

The GNN further includes fully connected layers 147 and 149 and an activation layer 148. The fully connected layer 147 concatenates the feature vectors output from the activation layer 141 and the fully connected layers 146-1 and 146-2. The input of the fully connected layer 147 has a dimensionality equal to the sum of the dimensionalities of the outputs from the activation layer 141 and the fully connected layers 146-1 and 146-2. The fully connected layer 147 converts each element of the concatenated feature vector to output a different feature vector. The output of the fully connected layer 147 may have the same dimensionality as the input or may have a different dimensionality from that of the input.

The activation layer 148 passes each element of the feature vector output from the fully connected layer 147 through an activation function. The fully connected layer 149 calculates a normalized cost function value from the feature vector output from the activation layer 148. The normalized cost function value is a scalar value between 0 and 1, inclusive.

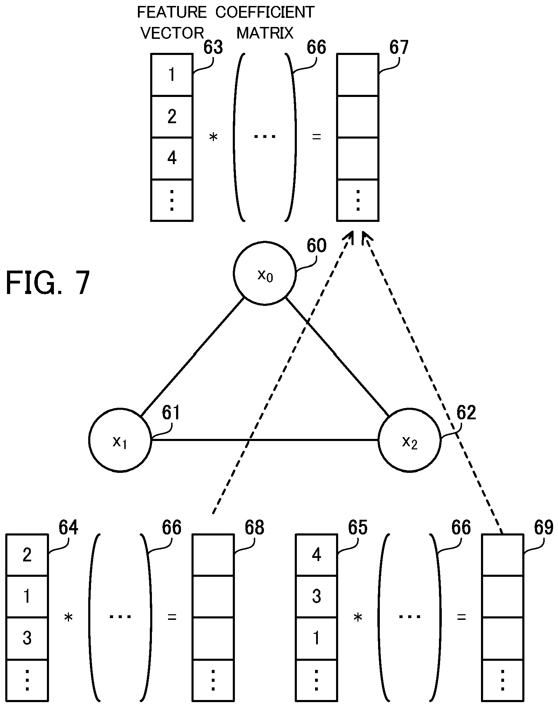

FIG. 7 illustrates an example of a graph convolution operation.

A node 60 corresponding to a variable #0 has an edge leading to a node 61 corresponding to a variable #1, and also has an edge leading to a node 62 corresponding to a variable #2. A feature vector 63 is associated with the node 60. A feature vector 64 is associated with the node 61. A feature vector 65 is associated with the node 62. Next described is a case in which the feature vector 63 of the node 60 is updated based on the feature vectors of the neighboring nodes.

The GNN multiplies the feature vector 63 by a coefficient matrix 66 to calculate a feature vector 67. Similarly, the GNN multiplies the feature vector 64 by the coefficient matrix 66 to calculate a feature vector 68, and multiplies the feature vector 65 by the coefficient matrix 66 to calculate a feature vector 69. The feature vectors 67, 68, and 69 have the same number of dimensions. The dimensionality of the feature vectors 67, 68, and 69 may be the same as or different from that of the feature vectors 63, 64, and 65. The coefficient matrix 66 is determined through machine learning.

The GNN combines the feature vector 67 with the feature vectors 68 and 69 of the nodes 61 and 62 adjacent to the node 60 to thereby calculate an updated feature vector of the node 60. For example, the GNN adds the feature vectors 68 and 69 to the feature vector 67. In the graph convolution operation, the feature vectors of nodes not adjacent to the node 60 are not combined with the feature vector 67.

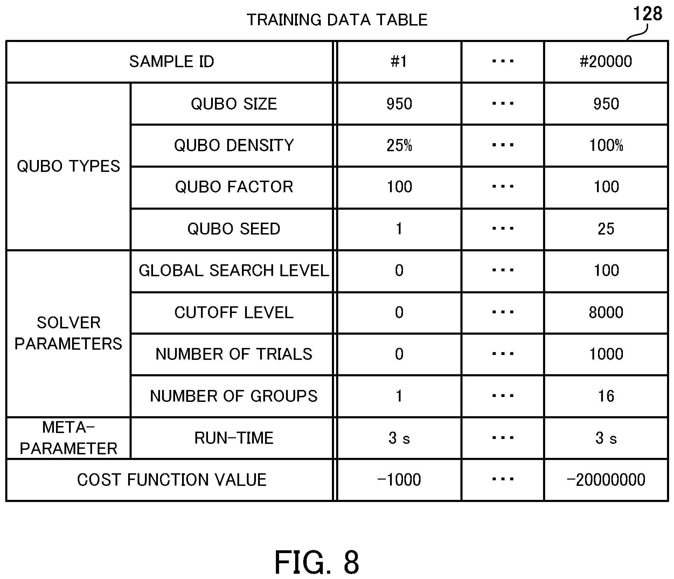

Next described is machine learning of the GNN. FIG. 8 illustrates an example of a training data table.

The information processor 100 trains the aforementioned GNN using training data. The training data includes multiple samples in each of which input data and teacher data are mapped to each other. The training data includes 20000 samples. The information processor 100 stores therein a training data table 128 with training data registered therein.

Each training data sample includes a sample ID; QUBO types; solver parameters; a meta-parameter; and a cost function value. The sample ID is the identifier that identifies the corresponding sample. The QUBO types are parameters for generating a QUBO matrix. The information processor 100 randomly generates a QUBO matrix according to the QUBO types. The solver parameters are parameters to be targeted in the above-described parameter search amongst the parameters of the QUBO solver 30. The meta-parameter is a parameter of the QUBO solver 30, which is not subject to the aforementioned parameter search. The cost function value corresponds to teacher data indicating the correct output of the GNN.

The QUBO types includes QUBO size; QUBO density; QUBO factor; and QUBO seed. The QUBO size is a parameter for adjusting the length of one side of the QUBO matrix. The length of one side of the QUBO matrix is obtained by adding 50 to the QUBO size (i.e., QUBO size + 50). The QUBO size is fixed, for example, to 950.

The QUBO density represents the percentage of non-zero elements contained in the corresponding QUBO matrix. For example, there are four candidates for the QUBO density: 25%, 50%, 75%, and 100%. The QUBO factor indicates a weight $\alpha$ of the corresponding constraint matrix. The QUBO factor is fixed, for example, to 100. The QUBO seed is a random number adjustment value for randomly generating elements of the QUBO matrix. For example, there are 25 candidates for the QUBO seed, ranging from 1 to 25, inclusive. The information processor 100 separately generates the cost matrix and the constraint matrix according to the QUBO types.

The solver parameters include global search level (gs_level); cutoff level (gs_cutoff); number of trials (num_run); and number of groups (num_group). The global search level indicates the strength of the global search that iteratively selects starting points for local searches. For example, there are 101 candidates for the global search level, ranging from 0 to 100, inclusive. The cutoff level is a threshold used for convergence determination in the global search. For example, there are 4873 candidates for the cutoff level, ranging from 0 to 8000, inclusive. The number of trials is the number of parallel trials for each group. There are 1004 candidates for the number of trials, ranging from 0 to 1000, inclusive. The total number of parallel trials is obtained by multiplying the number of groups by the number of trials. There are 16 candidates for the number of groups, ranging from 1 to 16, inclusive.

The meta-parameter includes run-time (time_runner). The run-time is the maximum run-time of one solution search by the QUBO solver 30. When the set run-time has elapsed, the solution search is terminated. The run-time is fixed, for example, to 3 seconds. The cost function value is a cost function value corresponding to a found solution vector. For example, there are 20000 candidates for the cost function value, ranging from -20 million to 0, inclusive. Note however that the cost function values registered in the training data table 128 may be scaled to a range of 0 to 1, inclusive. In creating the training data table 128, the information processor 100 measures the cost function values by calling the QUBO solver 30.

The information processor 100 trains the GNN based on the training data table 128. The information processor 100 randomly generates, for each sample, a cost matrix and a constraint matrix satisfying the QUBO types. Then, for each sample, the information processor 100 generates a cost graph and cost feature data from the generated cost matrix and also generates a constraint graph and constraint feature data from the generated constraint matrix.

With respect to each sample, the information processor 100 inputs, to the GNN, the solver parameters, the cost graph, the cost feature data, the constraint graph, and the constraint feature data. The information processor 100 compares a predicted value output from the GNN with the corresponding correct cost function value to calculate an error. For each mini-batch containing a certain number of samples, the information processor 100 calculates the error gradient of each weight included in the GNN by backward propagation and updates the weight based on the calculated error gradient.

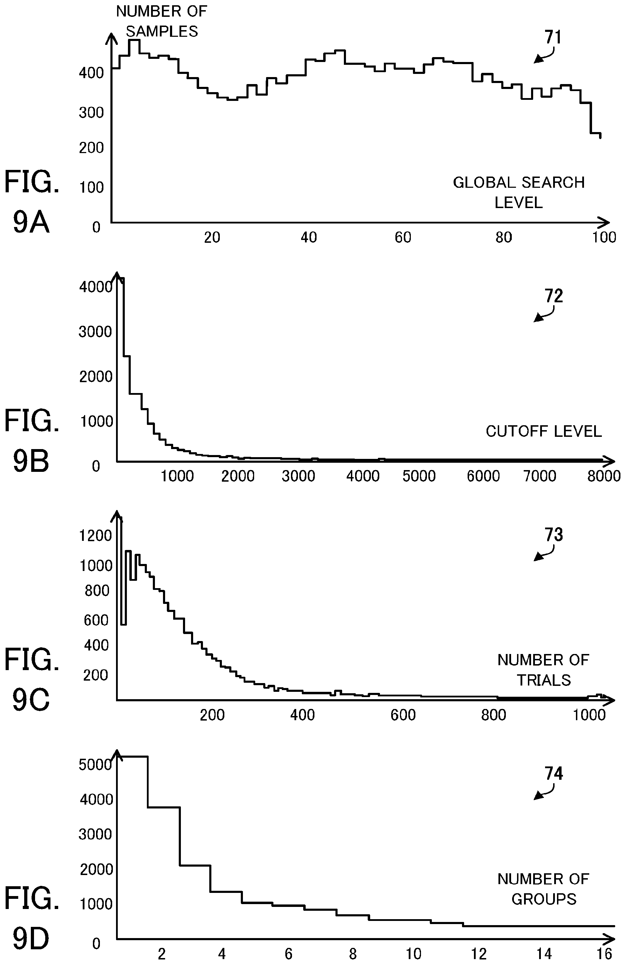

FIGS. 9A to 9D are graphs illustrating examples of distributions of solver parameter values.

A graph 71 illustrates an example of the distribution of global search level included in the 20000 samples. The horizontal axis of the graph 71 represents values of the global search level while the vertical axis represents the number of samples. A graph 72 illustrates an example of the distribution of the cutoff level included in the 20000 samples. The horizontal axis of the graph 72 represents values of the cutoff level while the vertical axis represents the number of samples. A graph 73 illustrates an example of the distribution of the number of trials included in the 20000 samples. The horizontal axis of the graph 73 represents values of the number of trials while the vertical axis represents the number of samples. A graph 74 illustrates an example of the distribution of the number of groups included in the 20000 samples. The horizontal axis of the graph 74 represents values of the number of groups while the vertical axis represents the number of samples.

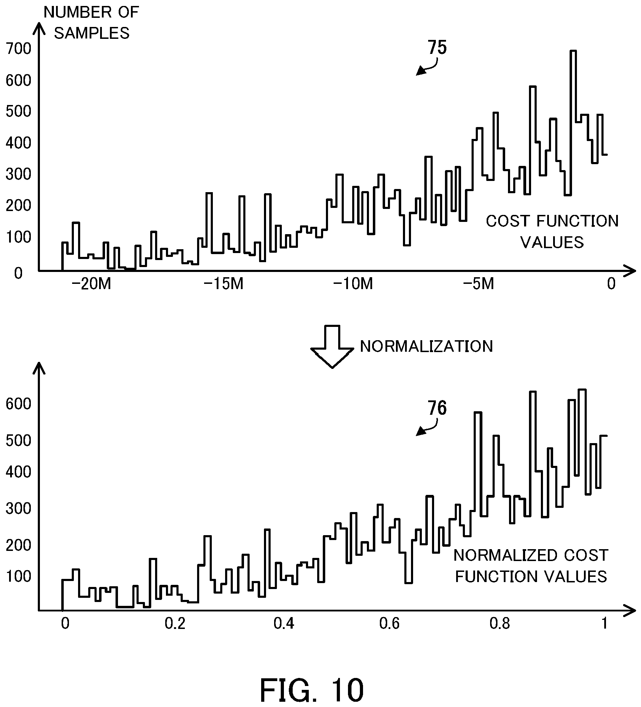

FIG. 10 is graphs illustrating an example of distributions of cost function values and normalized cost function values.

A graph 75 illustrates an example of the distribution of cost function values before normalization, included in the 20000 samples. The horizontal axis of the graph 75 represents the cost function values while the vertical axis represents the number of samples. A graph 76 illustrates an example of the distribution of normalized cost function values corresponding to the graph 75. The horizontal axis of the graph 76 represents the normalized cost function values while the vertical axis represents the number of samples. As can be seen from FIG. 10, normalization of the cost function values is a linear transformation by mini-max.

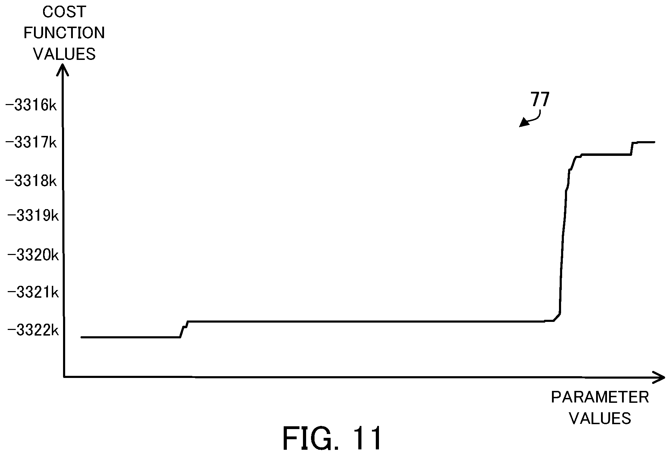

FIG. 11 is a graph illustrating an example of predictions of cost function values.

A graph 77 illustrates an example of cost function values that a GNN having been trained with the above training data would predict for a given QUBO problem. The horizontal axis of the graph 77 corresponds to solver parameter values, and the graph 77 represents predictions of non-normalized cost function values. As illustrated in the graph 77, the GNN predicts a different cost function value for a different parameter value. The information processor 100 identifies a parameter value that yields the best cost function value (e.g., the minimum cost function value) by Bayesian optimization without predicting cost function values corresponding to all the parameter values.

Next described are functions and processing procedures of the information processor 100.

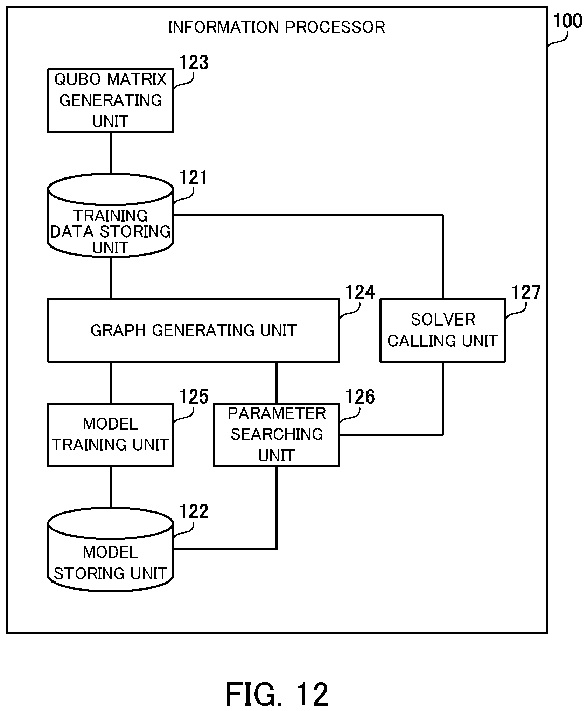

FIG. 12 is a block diagram illustrating an example of functions of the information processor.

The information processor 100 includes a training data storing unit 121 and a model storing unit 122. These storing units are implemented using, for example, the RAM 102 or the HDD 103. The information processor 100 includes a QUBO matrix generating unit 123, a graph generating unit 124, a model training unit 125, a parameter searching unit 126, and a solver calling unit 127. These processing units are implemented using, for example, the CPU 101 or the GPU 104 and programs.

The training data storing unit 121 stores the aforementioned training data table 128. The values of the QUBO types, the solver parameters, and the meta-parameter may be specified by the user or calculated using autosampling algorithms. The cost function values are recorded by the solver calling unit 127. The training data storing unit 121 also stores QUBO matrices generated by the QUBO matrix generating unit 123. The model storing unit 122 stores a GNN which is trained by the model training unit 125.

The QUBO matrix generating unit 123 randomly generates, based on the QUBO types of each sample included in the training data table 128, a QUBO matrix that satisfies the conditions of the QUBO types. In generating the QUBO matrix here, the cost matrix and the constraint matrix are separately generated.

The graph generating unit 124 converts the QUBO matrix of each sample stored in the training data storing unit 121 into graph data. The graph generating unit 124 generates a cost graph and cost feature data from the cost matrix, and also generates a constraint graph and constraint feature data from the constraint matrix. In addition, after the GNN is trained, the graph generating unit 124 receives a QUBO matrix representing a QUBO problem to be solved. This QUBO matrix may be created by the user or automatically generated from definitions of the QUBO problem. The graph generating unit 124 converts this QUBO matrix into graph data in the same manner as described above.

The model training unit 125 trains the GNN using the training data. The model training unit 125 inputs, into the GNN for each sample, the parameter values of the solver parameters, the cost graph, the cost feature data, the constraint graph, and the constraint feature data to calculate a predicted normalized cost function value. The model training unit 125 calculates an error between the predicted value and the correct normalized cost function value. The model training unit 125 updates, on a per-mini-batch basis, the weights of the GNN in such a manner as to reduce the error.

The parameter searching unit 126 uses the trained GNN to estimate the optimal solver parameter for the QUBO problem to be solved. The parameter searching unit 126 selects a parameter value and inputs the selected parameter value, the cost graph, the cost feature data, the constraint graph, and the constraint feature data into the GNN, to thereby calculate a predicted normalized cost function value. The parameter searching unit 126 changes the predicted normalized cost function value to a predicted non-normalized cost function value. The parameter searching unit 126 selects a parameter value to be tested next by Bayesian optimization. The parameter searching unit 126 repeats the above process to estimate the optimal parameter value.

The solver calling unit 127 calls the QUBO solver 30 and causes the QUBO solver 30 to solve the QUBO problem. With respect to each sample included in the training data table 128, the solver calling unit 127 specifies, for the QUBO solver 30, the corresponding QUBO matrix generated by the QUBO matrix generating unit 123 and the parameter values of the solver parameters. Note that the QUBO matrix specified here is obtained by summing the cost matrix and the constraint matrix together. The solver calling unit 127 records, in the training data table 128, a cost function value corresponding to the solution vector calculated by the QUBO solver 30. The measured cost function value may be obtained from the QUBO solver 30, or may be calculated by the solver calling unit 127 from the obtained solution vector.

The solver calling unit 127 acquires the optimal parameter value estimated by the parameter searching unit 126. The solver calling unit 127 calls the QUBO solver 30 with designation of the QUBO matrix representing the QUBO problem to be solved and the estimated parameter value. The solver calling unit 127 acquires a calculated solution vector and a cost function value. Note that the parameter searching unit 126 may designate two or more parameter value candidates for the QUBO problem to be solved, and the solver calling unit 127 may call the QUBO solver 30 more than once.

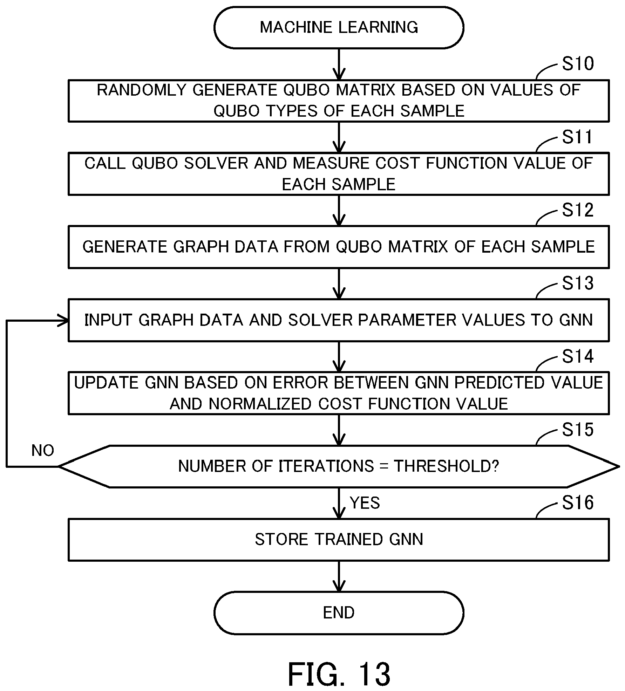

FIG. 13 is a flowchart illustrating an example of a procedure for machine learning.

(Step S10) The QUBO matrix generating unit 123 randomly generates a QUBO matrix based on the values of the QUBO types of each sample. At this time, the cost matrix and the constraint matrix are separated.

(Step S11) The solver calling unit 127 calls the QUBO solver 30 with designation of the QUBO matrix of each sample and the values of the solver parameters and measures the cost function value.

(Step S12) The graph generating unit 124 generates graph data from the QUBO matrix of each sample. The graph generating unit 124 generates a cost graph and cost feature data from the cost matrix, and also generates a constraint graph and constraint feature data from the constraint matrix.

(Step S13) The model training unit 125 extracts samples of the mini-batch size, and inputs the graph data and the values of the solver parameters of each sample to the GNN.

(Step S14) The model training unit 125 calculates an error between a predicted value output from the GNN and the corresponding correct normalized cost function value. The model training unit 125 uses backward propagation to update the GNN in such a manner as to reduce the error.

(Step S15) The model training unit 125 determines whether the number of iterations of steps S13 and S14 has reached a predetermined threshold. If the number of iterations has reached the threshold, the process moves to step S16; otherwise, the process returns to step S13.

(Step S16) The model training unit 125 stores the trained GNN. Note that the model training unit 125 may display the trained GNN on a screen of the display device 111 or may transmit it to a different information processor.

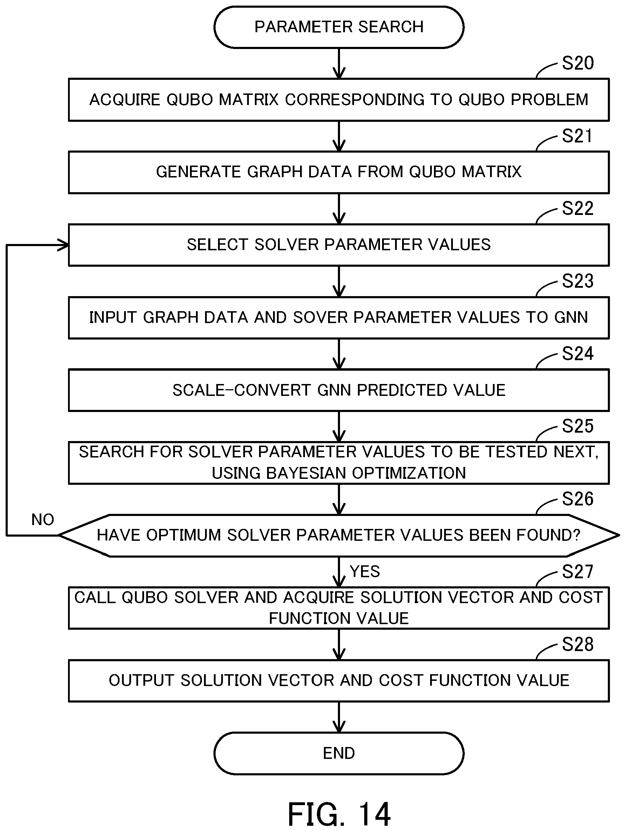

FIG. 14 is a flowchart illustrating an example of a procedure for a parameter search.

(Step S20) The graph generating unit 124 acquires a QUBO matrix corresponding to a QUBO problem to be solved. Here, the cost matrix and the constraint matrix are separated.

(Step S21) The graph generating unit 124 generates graph data from the acquired QUBO matrix. The graph generating unit 124 generates a cost graph and cost feature data from the cost matrix, and also generates a constraint graph and constraint feature data from the constraint matrix.

(Step S22) The parameter searching unit 126 selects values for the solver parameters.

(Step S23) The parameter searching unit 126 inputs the graph data and the selected values of the solver parameters to the GNN.

(Step S24) The parameter searching unit 126 scaleconverts a predicted normalized cost function value output from the GNN to a predicted cost function value.

(Step S25) The parameter searching unit 126 analyzes mappings between solver parameter values and predicted cost function values obtained so far. The parameter searching unit 126 uses Bayesian optimization to search for values of the solver parameters that may yield a better cost function value than the predicted cost function values obtained up to this point.

(Step S26) The parameter searching unit 126 determines whether the optimum values for the solver parameters have already been found. When determining that the optimum values of the solver parameters have already been found, the process moves to step S27. If the values of the solver parameters that may yield a better cost function value have yet to be tested, the process returns to step S22.

(Step S27) The solver calling unit 127 calls the QUBO solver 30 with designation of the QUBO matrix and the optimum values of the solver parameters and obtains a solution vector and a cost function value.

(Step S28) The solver calling unit 127 outputs the obtained solution vector and cost function value. The solver calling unit 127 may store the solution vector and the cost function value in a non-volatile storage device, display them on a screen of the display device 111, or transmit them to a different information processor.

As described above, the information processor 100 of the second embodiment uses the QUBO solver 30 which solves a QUBO problem by an annealing method, such as quantum annealing or simulated annealing. Herewith, the information processor 100 is able to solve a computationally intensive combinatorial optimization problem fast.

In addition, the information processor 100 optimizes the values of parameters that control the search method of the QUBO solver 30 according to a QUBO problem to be solved. This improves the accuracy of the solution vector calculated by the QUBO solver 30. The information processor 100 also searches for the optimum values for the solver parameters using Bayesian optimization. This reduces the number of trials needed to calculate a cost function value corresponding to the values of the solver parameters.

The information processor 100 uses a trained machine learning model to predict a cost function value according to the values of the solver parameters. This speeds up the parameter search for optimizing the values of the solver parameters compared to the case of repeatedly calling the QUBO solver 30. In addition, the run-time of the parameter search is shortened by employing the GPU 104 to perform the prediction with the machine learning model. The information processor 100 uses a GNN as the machine learning model. As a result, appropriate features are extracted without being affected by the arrangement of the variables on the QUBO matrix, which in turn improves the prediction accuracy of the cost function value.

Further, the information processor 100 separates the cost matrix and the constraint matrix, which have different trends in the coefficient distribution, and generates graph data from each of the cost matrix and the constraint matrix. Then, the information processor 100 inputs the graph data pertaining to the cost matrix and the graph data pertaining to the constraint matrix to the machine learning model. This improves the prediction accuracy of the cost function value. The information processor 100 also normalizes the cost function value so that the machine learning model predicts a numerical value between 0 and 1, inclusive. This allows the information processor 100 not only to efficiently train the machine learning model but also to improve the prediction accuracy of the machine learning model.

According to an aspect, it is possible to speed up adjustment of parameter values of a solver that performs combinatorial optimization processing.

**Claims**

1. A computer program that causes a computer to execute a process comprising:

generating, for combinatorial optimization processing that searches for an optimum value of a solution vector (13) including a plurality of variables each taking a discrete value based on an evaluation value calculated from the solution vector and a coefficient matrix (14) with rows and columns corresponding to the plurality of variables, feature data (15) from the coefficient matrix;

generating parameter data (16) representing one candidate value amongst a plurality of candidate values for a parameter (21) controlling a search method of a solver (20) that executes the combinatorial optimization processing by annealing;

calculating a predicted value (18) representing a prediction of the evaluation value corresponding to the one candidate value by inputting the feature data and the parameter data to a machine learning model (17) that has been trained; and

determining a parameter value to be set for the parameter of the solver by repeating the generating of the parameter data and the calculating of the predicted value.

2. The computer program according to claim 1, wherein:

the feature data includes graph data (132, 134) including a plurality of nodes corresponding to the plurality of variables and a plurality of feature vectors (133, 135) mapped to the plurality of nodes, and

the machine learning model performs a convolution operation on the plurality of feature vectors (63 to 65) based on a connection relationship of the plurality of nodes (60 to 62) represented by the graph data.

3. The computer program according to claim 1 or 2, wherein:

the coefficient matrix includes a constraint matrix (44) which represents constraints on the discrete values taken by the plurality of variables and a cost matrix (43) which represents a relationship between the plurality of variables, other than the constraints, and

the feature data includes first graph data (132) generated from the cost matrix and second graph data (134) generated from the constraint matrix.

4. The computer program according to claim 1, 2 or 3, wherein:
the determining includes performing Bayesian optimization processing that selects a candidate value to be tested next based on one or more tested candidate values (136) and one or more calculated predicted values (138).

5. The computer program according to any preceding claim, the process further comprising:
training the machine learning model using training data (128) in which a plurality of coefficient matrices, a plurality of parameter values, and a plurality of evaluation values are mapped to each other.

6. A calculation method executed by a computer, the calculation method comprising:

generating, for combinatorial optimization processing that searches for an optimum value of a solution vector (13) including a plurality of variables each taking a discrete value based on an evaluation value calculated from the solution vector and a coefficient matrix (14) with rows and columns corresponding to the plurality of variables, feature data (15) from the coefficient matrix;

generating parameter data (16) representing one candidate value amongst a plurality of candidate values for a parameter (21) controlling a search method of a solver (20) that executes the combinatorial optimization processing by annealing;

calculating a predicted value (18) representing a prediction of the evaluation value corresponding to the one candidate value by inputting the feature data and the parameter data to a machine learning model (17) that has been trained; and

determining a parameter value to be set for the parameter of the solver by repeating the generating of the parameter data and the calculating of the predicted value.

7. An information processing apparatus comprising:

memory means (11) for storing a coefficient matrix (14) having rows and columns corresponding to a plurality of variables each taking a discrete value and a machine learning model (17) that has been trained; and
processing means (12) for:

generating, for combinatorial optimization processing that searches for an optimum value of a solution vector (13) including the plurality of variables based on an evaluation value calculated from the solution vector and the coefficient matrix, feature data (15) from the coefficient matrix,

generating parameter data (16) representing one candidate value amongst a plurality of candidate values for a parameter (21) controlling a search method of a solver (20) that executes the combinatorial optimization processing by annealing,

calculating a predicted value (18) representing a prediction of the evaluation value corresponding to the one candidate value by inputting the feature data and the parameter data to the machine learning model, and

determining a parameter value to be set for the parameter of the solver by repeating the generating of the parameter data and the calculating of the predicted value.

# INFORMATION PROCESSOR 10

## STORING UNIT 11

$$E = \boxed{x_0 \mid x_1 \mid x_2} \; 13 \quad * \quad \begin{array}{|c|c|c|} \hline q_{00} & q_{01} & q_{02} \\ \hline q_{10} & q_{11} & q_{12} \\ \hline q_{20} & q_{21} & q_{22} \\ \hline \end{array} \; 14 \quad * \quad \begin{array}{|c|} \hline x_0 \\ \hline x_1 \\ \hline x_2 \\ \hline \end{array} \; 13$$

SOLUTION VECTOR

COEFFICIENT MATRIX

FEATURE DATA 15

$x_0$ $x_1$ $x_2$

PARAMETER DATA 16

MACHINE LEARNING MODEL 17

PREDICTED VALUE (EVALUATION VALUE E) 18

## PROCESSING UNIT 12

## SOLVER 20

PARAMETER 21

# FIG. 1

FIG. 2

$$E(x) = x^t Q x = \boxed{\begin{array}{|c|c|c|c|} \hline x_0 & x_1 & x_2 & \cdots \\ \hline \end{array}} \quad *$$

$x^t$   41

SOLUTION VECTOR

$Q = Q_{cost} + \alpha\, Q_{const}$   **42**

$$\begin{array}{|c|c|c|c|} \hline 1 & 2 & 4 & \cdots \\ \hline 2 & 1 & 3 & \cdots \\ \hline 4 & 3 & 1 & \cdots \\ \hline \vdots & \vdots & \vdots & \ddots \\ \hline \end{array}$$

QUBO MATRIX

$x$   **41**

$$\begin{array}{|c|} \hline x_0 \\ \hline x_1 \\ \hline x_2 \\ \hline \vdots \\ \hline \end{array}$$

$*$

$Q_{cost}$   **43**

$$\begin{array}{|c|c|c|c|} \hline & & & \cdots \\ \hline & & & \cdots \\ \hline & & & \cdots \\ \hline \vdots & \vdots & \vdots & \ddots \\ \hline \end{array}$$

COST MATRIX

$Q_{const}$   **44**

$$\begin{array}{|c|c|c|c|} \hline & & & \cdots \\ \hline & & & \cdots \\ \hline & & & \cdots \\ \hline \vdots & \vdots & \vdots & \ddots \\ \hline \end{array}$$

CONSTRAINT MATRIX

FIG. 3

COST
FUNCTION
VALUES

51

52

53

PARAMETER
VALUES

FIG. 4

131

QUBO
PROBLEM

GRAPH
GENERATOR

132

COST GRAPH

133

COST FEATURE
DATA

134

CONSTRAINT
GRAPH

135

CONSTRAINT
FEATURE DATA

136

PARAMETER
VALUE

BAYESIAN
OPTIMIZER

138

COST
FUNCTION
VALUE

SCALE
CONVERTER

GNN

137

NORMALIZED
COST FUNCTION
VALUE

FIG. 5

FIG. 6

FEATURE COEFFICIENT
VECTOR MATRIX

FIG. 7

TRAINING DATA TABLE

128

| SAMPLE ID | | #1 | ・・・ | #20000 |
|---|---|---|---|---|
| QUBO TYPES | QUBO SIZE | 950 | ・・・ | 950 |
| | QUBO DENSITY | 25% | ・・・ | 100% |
| | QUBO FACTOR | 100 | ・・・ | 100 |
| | QUBO SEED | 1 | ・・・ | 25 |
| SOLVER PARAMETERS | GLOBAL SEARCH LEVEL | 0 | ・・・ | 100 |
| | CUTOFF LEVEL | 0 | ・・・ | 8000 |
| | NUMBER OF TRIALS | 0 | ・・・ | 1000 |
| | NUMBER OF GROUPS | 1 | ・・・ | 16 |
| META-PARAMETER | RUN-TIME | 3 s | ・・・ | 3 s |
| COST FUNCTION VALUE | | −1000 | ・・・ | −20000000 |

FIG. 8

FIG. 9A

NUMBER OF SAMPLES

71

GLOBAL SEARCH LEVEL

FIG. 9B

72

CUTOFF LEVEL

FIG. 9C

73

NUMBER OF TRIALS

FIG. 9D

74

NUMBER OF GROUPS

FIG. 10

FIG. 11

INFORMATION PROCESSOR                                    100

**123**
QUBO MATRIX
GENERATING
UNIT

**121**
TRAINING
DATA STORING
UNIT

GRAPH GENERATING UNIT          **124**

SOLVER
CALLING UNIT          **127**

MODEL
TRAINING UNIT          **125**

PARAMETER
SEARCHING
UNIT          **126**

MODEL
STORING UNIT          **122**

# FIG. 12

```
        ╭─────────────────────────╮
        │    MACHINE LEARNING     │
        ╰─────────────────────────╯
                    │
                    ▼                          ┌─ S10
  ┌──────────────────────────────────────────────┐
  │ RANDOMLY GENERATE QUBO MATRIX BASED ON VALUES OF │
  │         QUBO TYPES OF EACH SAMPLE              │
  └──────────────────────────────────────────────┘
                    │                          ┌─ S11
                    ▼
  ┌──────────────────────────────────────────────┐
  │ CALL QUBO SOLVER AND MEASURE COST FUNCTION VALUE OF │
  │               EACH SAMPLE                      │
  └──────────────────────────────────────────────┘
                    │                          ┌─ S12
                    ▼
  ┌──────────────────────────────────────────────┐
  │ GENERATE GRAPH DATA FROM QUBO MATRIX OF EACH SAMPLE │
  └──────────────────────────────────────────────┘
                    │                          ┌─ S13
                    ▼
  ┌──────────────────────────────────────────────┐
  │ INPUT GRAPH DATA AND SOLVER PARAMETER VALUES TO GNN │
  └──────────────────────────────────────────────┘
                    │                          ┌─ S14
                    ▼
  ┌──────────────────────────────────────────────┐
  │ UPDATE GNN BASED ON ERROR BETWEEN GNN PREDICTED VALUE │
  │      AND NORMALIZED COST FUNCTION VALUE        │
  └──────────────────────────────────────────────┘
                    │                          ┌─ S15
         NO         ▼
  ┌──────────────────────────────────────────────┐
  │        NUMBER OF ITERATIONS = THRESHOLD?       │
  └──────────────────────────────────────────────┘
                    │ YES                      ┌─ S16
                    ▼
  ┌──────────────────────────────────────────────┐
  │              STORE TRAINED GNN                 │
  └──────────────────────────────────────────────┘
                    │
                    ▼
        ╭─────────────────────────╮
        │           END           │
        ╰─────────────────────────╯
```

# FIG. 13

PARAMETER SEARCH

S20
ACQUIRE QUBO MATRIX CORRESPONDING TO QUBO PROBLEM

S21
GENERATE GRAPH DATA FROM QUBO MATRIX

S22
SELECT SOLVER PARAMETER VALUES

S23
INPUT GRAPH DATA AND SOVER PARAMETER VALUES TO GNN

S24
SCALE-CONVERT GNN PREDICTED VALUE

S25
SEARCH FOR SOLVER PARAMETER VALUES TO BE TESTED NEXT, USING BAYESIAN OPTIMIZATION

S26
NO    HAVE OPTIMUM SOLVER PARAMETER VALUES BEEN FOUND?

YES    S27
CALL QUBO SOLVER AND ACQUIRE SOLUTION VECTOR AND COST FUNCTION VALUE

S28
OUTPUT SOLUTION VECTOR AND COST FUNCTION VALUE

END

FIG. 14

**EUROPEAN SEARCH REPORT**

Application Number

EP 23 15 6926

## DOCUMENTS CONSIDERED TO BE RELEVANT

| Category | Citation of document with indication, where appropriate, of relevant passages | Relevant to claim |
|---|---|---|
| X | HUANG TIAN ET AL: "QROSS: QUBO Relaxation Parameter optimisation via Learning Solver Surrogates", 2021 IEEE 41ST INTERNATIONAL CONFERENCE ON DISTRIBUTED COMPUTING SYSTEMS WORKSHOPS (ICDCSW), IEEE, 7 July 2021 (2021-07-07), pages 35-40, XP033978008, DOI: 10.1109/ICDCSW53096.2021.00013 [retrieved on 2021-09-21] * the whole document * | 1-7 |
| X | SIONG THYE GOH ET AL: "A Hybrid Framework Using a QUBO Solver For Permutation-Based Combinatorial Optimization", ARXIV.ORG, CORNELL UNIVERSITY LIBRARY, 201 OLIN LIBRARY CORNELL UNIVERSITY ITHACA, NY 14853, 6 July 2021 (2021-07-06), XP091000804, * the whole document * | 1-7 |
| A | TIANFAN FU ET AL: "Differentiable Scaffolding Tree for Molecular Optimization", ARXIV.ORG, CORNELL UNIVERSITY LIBRARY, 201 OLIN LIBRARY CORNELL UNIVERSITY ITHACA, NY 14853, 24 January 2022 (2022-01-24), XP091127800, * abstract * * Chapter 3; page 2 – page 6; figure 2 * | 2 |

-/--

**CLASSIFICATION OF THE APPLICATION (IPC)**

INV.
G06N10/20
G06N3/0464
G06N7/01
G06N10/60
G06N10/80

**TECHNICAL FIELDS SEARCHED (IPC)**

G06N

The present search report has been drawn up for all claims

| Place of search | Date of completion of the search | Examiner |
|---|---|---|
| The Hague | 17 October 2023 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt

European Patent Office

Office européen des brevets

**EUROPEAN SEARCH REPORT**

Application Number

**EP 23 15 6926**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TOUFAN D TAMBUNAN ET AL: "Quantum Annealing for Vehicle Routing Problem with weighted Segment", ARXIV.ORG, CORNELL UNIVERSITY LIBRARY, 201 OLIN LIBRARY CORNELL UNIVERSITY ITHACA, NY 14853, 25 March 2022 (2022-03-25), XP091184435, * abstract * * Chapter II; page 2 – page 4; figures 1-3 * ----- | 3 | |

TECHNICAL FIELDS SEARCHED (IPC)

The present search report has been drawn up for all claims

| Place of search | Date of completion of the search | Examiner |
|---|---|---|
| The Hague | 17 October 2023 | Hasnas, Sergiu |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210334606
- JP 2020123270 A
- JP 2021152892 A
- US 11227190 B